# EUROPEAN PATENT SPECIFICATION

(11) **EP 2 412 644 B1**
(45) Date of publication and mention of the grant of the patent: **05.03.2014**
(21) Application number: 10756172.2
(22) Date of filing: 25.03.2010
(51) Int. Cl.: B32B 27/08, B32B 27/32, B32B 1/02, B32B 1/04, B65D 65/40, B65D 75/58

(54) **PACKAGING BODY**
VERPACKUNGSKÖRPER
CORPS D'EMBALLAGE

(30) Priority: 27.03.2009 JP 2009080623
(43) Date of publication of application: 01.02.2012
(73) Proprietor: Unicharm Corporation, Ehime 799-0111 (JP)
(72) Inventor: BANDO, Takeshi, Kanonji-shi Kagawa 769-1602 (JP)
(74) Representative: Murgatroyd, Susan Elizabeth
(86) International application number: PCT/JP2010/055254
(87) International publication number: WO 2010/110376

(56) References cited:
- DE-A1-102007 035 501
- JP-A- 9 202 369
- JP-A- 9 202 369
- JP-A- 11 268 783
- JP-A- 11 268 783
- JP-A- 59 001 379
- JP-U- 57 110 083
- JP-U- 57 110 083
- US-A- 5 531 325

## Description

### BACKGROUND OF THE INVENTION

### Field of the Invention

The invention relates to a package for dispensation of a sheet-type article such as wet tissues stored in a article storage space so as to be taken out through an opening one by one, and more particularly, to a technique for increasing the freedom of decorative design to be provided on the package.

### Description of the related Art

Japanese non-examined laid-open Patent Publication Nos. 2000-229681 (Reference 1), H6-293368 (Reference 2) and 2002-249184 (Reference 3) respectively discloses packages for storing wet tissues to remove dirt. In Reference 1, the package includes a base sheet for forming an article storage space, and a reinforcing sheet. The reinforcing sheet is bonded to an outer side of the base sheet so as to cover an opening formed in the base sheet. A cut is formed in the reinforcing sheet and a region surrounded by the cut is used as a lid for opening and closing the opening. In Reference 2, the package includes a base sheet for forming an article storage space, a reinforcing sheet and a flexible sheet. The reinforcing sheet is bonded to an outer side of the base sheet so as to cover the periphery of an opening formed in the base sheet. The flexible sheet is bonded to an outer side of the base sheet so as to cover the opening formed in the base sheet. The flexible sheet is used as a lid for opening and closing the opening. In Reference 3, the package includes a base sheet for forming an article storage space, a plastic sheet and a lid sheet. The lid sheet is bonded to the plastic sheet and can open and close an opening formed in the plastic sheet. The plastic sheet with the lid sheet bonded thereto is bonded to an inner side of the base sheet such that the lid sheet is positioned over the opening formed in the base sheet.

DE 10 2007 035501 discloses a package comprising an article storage space formed by a foil and an opening through which articles stored in the article storage space can be taken out. The package has a lid for opening and closing the opening and the lid is formed from the foil which is made of several sheets. One side of the lower foil sheet is bonded to a side of the upper foil sheet which faces the article storage space when the lid is closed and the other side of lower foil sheet is bonded to one side of a third sheet in which the opening is formed. The lid can be peeled off from the third sheet to open the opening.

### SUMMARY OF THE INVENTION

In the package of Reference 1, the reinforcing sheet for opening and closing the opening is bonded to an outer side of the base sheet. Further, in the package of Reference 2, the reinforcing sheet and the flexible sheet for opening and closing the opening are bonded to the outer side of the base sheet. Therefore, decorative design to be provided on the package, i.e., in combination of decorative design on the base sheet and decorative design on the reinforcing sheet, is limited. In the package of Reference 3, the plastic sheet and the lid sheet for opening and closing the opening is bonded to an inner side of the base sheet. In the package of Reference 3, however, the lid sheet bonded to the plastic sheet is positioned over the opening formed in the base sheet. Therefore, decorative design to be provided on the package i.e., in combination of decorative design on the base sheet and decorative design on the lid sheet, is limited.

It is accordingly, an object of the invention to increase a freedom of decorative design to be provided on a package for storing a sheet-type article for dispensation through an opening.

Above-described object can be achieved by the package in accordance with appended claim 1. Representative package according to the invention may be used as a package for storing a sheet-type article or suitably wet tissues for dispensation. The representation package according to the invention is provided with the first sheet, the second sheet, and the third sheet.

The first sheet comprises a heat-seating sheet which can be bonded by heating or heat-sealed. Suitable, a heat-sealing film which can hold the article in wet condition is used. For example, a laminate film is used which includes a protective layer made of polyethylene terephthalate (PET) resin, a moisture keeping layer (drying prevention layer) made of aluminum, and a heat-sealing layer made of biaxial oriented polypropylene resin. A body having an article storage space for storing the article is formed by the first sheet. A first lid element is formed in the first sheet.

The second sheet is suitably formed by a rigid sheet, such as a film or synthetic paper made of polypropylene (PP) resin or polyethylene terephthalate (PET) resin. A second lid element is formed in the second sheet.

The third sheet is suitably formed by a rigid sheet, such as the same sheet as the second sheet. An opening through which an article stored within the article storage space is taken out is formed in the third sheet.

The package is formed by bonding the first sheet, the second sheet and the third sheet. One side of the second sheet is bonded to a side (back) of the first sheet which faces the article storage space in the state in which the second lid element formed in the second sheet is positioned to be opposed to the first lid element formed in the first sheet. Further, the other side of the second sheet is bonded to one side of the third sheet such that the opening formed in the third sheet is covered by the second lid element formed in the second sheet (in the state in which the opening is positioned to be opposed to the second lid element). At this time, the second sheet is bonded to the third sheet such that at least the second lid element can be peeled off.

In this invention, the opening formed in the third sheet on the back side of the first sheet is opened and closed by the first lid element formed in the first sheet which forms the body having the article storage space. Therefore, it is necessary for decorative design on the package to be provided only on the surface of the first sheet, so that the freedom of the decorative design to be provided on the package can be enhanced. Further, the second sheet having the second lid element is disposed between the first sheet and the third sheet, so that the strength of the opening and the strength of the lid can be increased.

In one embodiment of the invention, the first lid element has a first tab portion and the second lid element has a second tab portion. Further, the second sheet is bonded to the first sheet in the state in which the second tab portion of the second lid element is positioned to be opposed to the first tab portion of the first lid element. In this embodiment, the first lid element and the second lid element are bonded together in the state in which the first tab portion of the first lid element and the second tab portion of the second lid element are opposed to each other. In this manner, the lid formed by the first lid element and the second lid element can be easily opened and closed.

As another aspect of the invention, the first lid element is formed by a first cut in the first sheet and the second lid element is formed by a second cut in the second sheet. Further, at least one of the first cut and the second cut is closed. The "cut" may be formed, for example, by holes (typically, perforations) formed at certain intervals, a partly cut-off line which is partly kept uncut or a cut-off line which is entirely cut. The manner of forming the "cut" includes the manner of cutting in part and the manner of cutting in its entirety. The description that "the cut formed in the sheet is closed" means that the cut is formed such that the whole region surrounded by the cut can be cut off from the sheet. In this embodiment, the lid element can be readily formed by forming the cuts in the first and second sheets.

In an another aspect of the invention, the first lid element is formed by a first cut in the first sheet and the second lid element is formed by a second cut in the second sheet. Further, at least one of the first cut and the second cut is open (in an open-loop configuration) on a side of a region facing the opening opposite from at least one of the first tab portion and the second tab portion. The description that "the cut formed in the sheet is open" means that the cut is formed such that part of the region surrounded by the cut is held connected to the sheet. In this embodiment, at least one of the lid elements is partly held connected to the sheet, so that it can be prevented from getting lost.

In a further another aspect of the invention, the second lid element has a second tab portion, an opening-closing portion and a proximal portion. The opening-closing portion is dimensioned to open and close the opening formed in the third sheet. Namely, it is provided such that the area of the opening-closing portion is larger than the area of the opening. The proximal portion is formed on a side of the opening-closing portion opposite from the second tab portion. Further, the other side of the second sheet is bonded to the one side of the third sheet such that at least the second lid element can be peeled off. In this embodiment, the other side of the second sheet is not bonded to the one side of the third sheet at a region of the second tab portion of the second lid element. Thus, the user can easily hold the second tab portion (a tab portion formed by the second tab portion and the first tab portion) with the fingers, so that the operation of peeling the second lid element (a lid element formed by the first lid element and the second lid element) away from the third sheet can be facilitated. Further, in this embodiment, the other side of the second sheet is bonded to the one side of the third sheet such that bonding strength (adhesion) in a region of the proximal portion is equal to or higher than that in a region of the opening-closing portion. The description that "bonding strength in a region of the proximal portion is equal to or higher than that in a region of the opening-closing portion" means not only that the bonding strength in a region of the proximal portion is higher than that in a region of the opening-closing portion, but that the bonding strength in a region of the proximal portion is equal to that in a region of the opening-closing portion (for example, by bonding using the same adhesive). If "the bonding strength in a region of the proximal portion is higher than that in a region of the opening-closing portion", when the second lid element (the lid element formed by the first lid element and the second lid element) is peeled up to the boundary between the opening-closing portion and the proximal portion, a force applied to the user's fingers changes. Therefore, the user can readily recognize that the second lid element (the lid element formed by the first lid element and the second lid element) has been peeled off up to the boundary between the opening-closing portion and the proximal portion. Further, the bonding strength in a region of the other side of the second sheet excluding the region of the second lid element may be equal to that in the region of the second lid element (for example, by bonding using the same adhesive), but it is preferable to be higher than that in the region of the second lid element. Typically, the region excluding the second lid element is bonded such that it cannot be peeled off.

Various methods can be used to bond the other side of the second sheet to the one side of the third sheet such that the second lid element can be peeled off. For example, an adhesive is applied to the other side of the second sheet. Then, in order to adjust the bonding strength (adhesion) of the adhesive, a medium such as acrylic resin and urethane resin is printed on a desired area on the side to which the adhesive has been applied. In this case, the medium is not printed on a region excluding the second lid element. Therefore, the region excluding the second lid element is securely bonded by the adhesive, so that its separation can be prevented. The medium is printed on the regions of the opening-closing portion and the proximal portion of the second lid element in a pattern such as dots and meshes. Thus, the bonding strength in the regions of the opening-closing portion and the proximal portion can be appropriately adjusted such that the second lid element can be peeled off. The bonding strength can be adjusted, for example, by the pitch of dots or meshes. The medium is printed entirely on the region of the second tab portion of the second lid element, so that the second tab portion of the second lid element is not bonded. As an alternative method, an adhesive may be applied to the other side of the second sheet, and a mold release agent such as silicone may be applied to a desired region of the one side of the third sheet.

Further, suitably, the first lid element and the second lid element are identically shaped. Further, as a method of bonding the one side of the second sheet to the back of the first sheet (the side facing the article storage space), an appropriate bonding method can be used in which the first lid element and the second lid element are not separated from each other when the lid element formed by the first lid element and the second lid element is opened or closed.

In a further aspect of the invention, at least one of the first cut and the second cut has ends shaped to prevent separation. The cut having ends shaped to prevent separation includes a cut having ends bent toward each other in a curved form and a cut having curved (typically arcuate) ends. In this embodiment, when the lid element is peeled up to the cut ends, due to the separation preventing shape, the reaction force applied to the user's fingers changes, so that the user can readily recognize that the lid element has been peeled off up to the region of the ends. Thus, the region of the ends can be prevented from getting damaged.

In a further aspect of the invention, at least one of the first lid element and the second lid element has a slit which is formed on a side of a region facing the opening opposite from at least one of the first tab portion and the second tab portion and extends in a direction transverse to a direction in which the at least one of the first lid element and the second lid element is peeled off. The "direction in which the lid element is peeled off" means a direction in which the lid element is peeled off when the tab portion of the lid element is held with the user's fingers and pulled in a direction that opens the opening. Further, the "slit" typically comprises a groove having a depth smaller than the thickness of the sheet. As the "slit", a slit (continuous slit) continuously extending between two points or a plurality of slits (split slits) extending between two points and spaced apart from each other can be used. In this embodiment, the slit functions as a pivot of a hinge structure, so that a force of the lid to return in a direction that closes the opening is weakened. Thus, the user can easily take the article out of the article storage space through the opening without need of holding the lid element by hand.

In a further aspect of the invention, at least one of the first lid element and the second lid element has a plurality of slits spaced apart from each other and extending in a direction transverse to the direction in which the lid element is peeled off. The direction transverse to the direction in which the lid element is peeled off typically represents a direction perpendicular (or substantially perpendicular) to the peeling direction. In this embodiment, the plurality of slits (split slits) extending in a direction transverse to the direction in which the lid element is peeled off function as a pivot of a hinge structure. Thus, the user can easily take the article out of the article storage space through the opening. Further, due to provision of the plurality of slits spaced apart from each other, reduction of the strength of the lid element can be prevented.

In a further aspect of the invention, the second lid element has a plurality of slits which are formed on a side of the region facing the opening opposite from the second tab portion and spaced apart from each other in the direction in which the second lid element is peeled off, and extend in a direction transverse to the peeling direction of the second lid element. In this embodiment, when one of the slits which is remoter from the tab portion functions as a pivot of a hinge structure, a force of the lid to return in a direction that closes the opening is further weakened due to the existence of another slit located closer to the tab portion. Thus, the user can more easily take the article out of the article storage space through the opening.

In a further aspect of the invention, the second lid element has a void which is formed on a side of the region facing the opening opposite from the second tab portion and extends in a direction transverse to the direction in which the second lid element is peeled off. The shape of the void can be appropriately selected. In this embodiment, when an edge of the void which faces away from the tab portion functions as a pivot of a hinge structure, the rigidity of the hinge structure is reduced due to the existence of the void. Thus, the user can more easily take the article out of the article storage space through the opening.

According to this invention, the freedom of decorative design to be provided on a package for storing an article within an article storage space for dispensation can be enhanced. Other objects, features and advantages of the present invention will be readily understood after reading the following detailed description together with the accompanying drawings and the claims.

### BRIEF DESCRIPTION OF THE DRAWINGS

FIG. 1 is a perspective view showing a package according to a first embodiment of the invention, with an opening closed.
FIG. 2 is a perspective view showing the package according to the first embodiment, with the opening opened.
FIG. 3 schematically illustrates the first embodiment.
FIG. 4 shows a bonding side of an intermediate sheet.
FIG. 5 is a sectional view (taken along line V-V in FIG. 1) of the first embodiment, with the opening closed.
FIG. 6 is a sectional view (taken along line VI-VI in FIG. 2) of the first embodiment, with the opening opened.
FIG. 7 is a perspective view showing a package according to a second embodiment not forming part of the invention, with an opening closed.
FIG. 8 is a perspective view showing the package according to the second embodiment, with the opening opened.
FIG. 9 schematically illustrates the second embodiment.
FIG. 10 shows a bonding side of an intermediate sheet.
FIG. 11 is a sectional view (taken along line XI-XI in FIG. 6) of the second embodiment, with the opening closed.
FIG. 12 is a sectional view (taken along line XII-XII in FIG. 7) of the second embodiment, with the opening opened.
FIG. 13 schematically illustrates a third embodiment.
FIG. 14 schematically illustrates a fourth embodiment.
FIG. 15 schematically illustrates a fifth embodiment.
FIG. 16 schematically illustrates a sixth embodiment.
FIG. 17 is a perspective view showing the package according to the sixth embodiment, with the opening closed.
FIG. 18 is a perspective view showing the package according to the sixth embodiment, with the opening opened.
FIG. 19 schematically illustrates a seventh embodiment.
FIG. 20 illustrates a modification to the second embodiment.
FIG. 21 illustrates another modification to the second embodiment.
FIG. 22 illustrates another modification to the second embodiment.

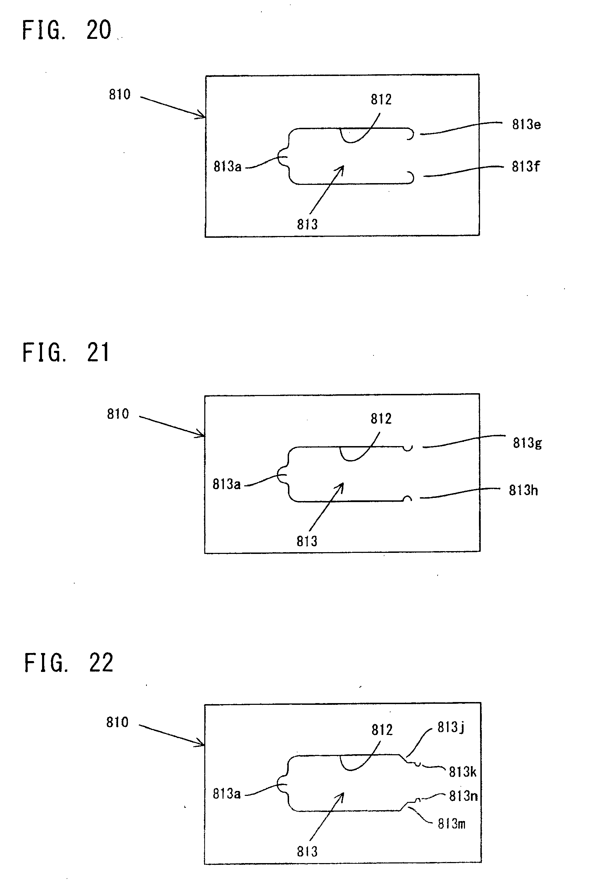

None of the embodiments of figures 20-22 form part of the invention.

### DETAILED DESCRIPTION OF REPRESENTATIVE EMBODIMENT OF THE INVENTION

Each of the additional features and method steps disclosed above and below may be utilized separately or in conjunction with other features and method steps to provide and manufacture improved packages and method for using such packages and devices utilized therein. Representative examples of the present invention, which examples utilized many of these additional features and method steps in conjunction, will now be described in detail with reference to the drawings. This detailed description is merely intended to teach a person skilled in the art further details for practicing preferred aspects of the present teachings and is not intended to limit the scope of the invention. Only the claims defme the scope of the claimed invention. Therefore, combinations of features and steps disclosed within the following detailed description may not be necessary to practice the invention in the broadest sense, and are instead taught merely to particularly describe some representative examples of the invention, which detailed description will now be given with reference to the accompanying drawings.

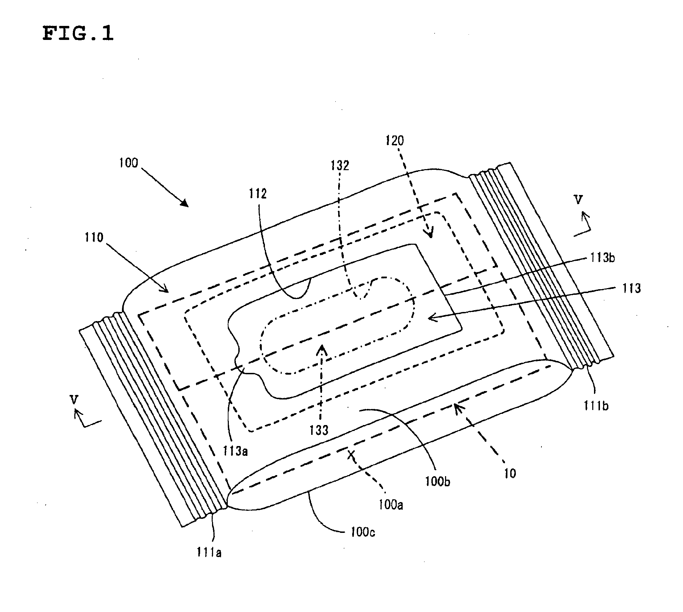

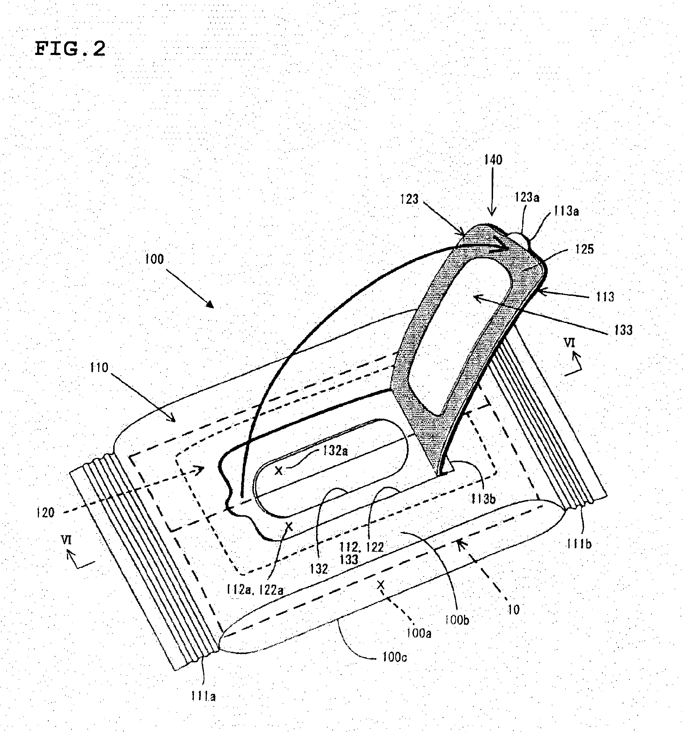

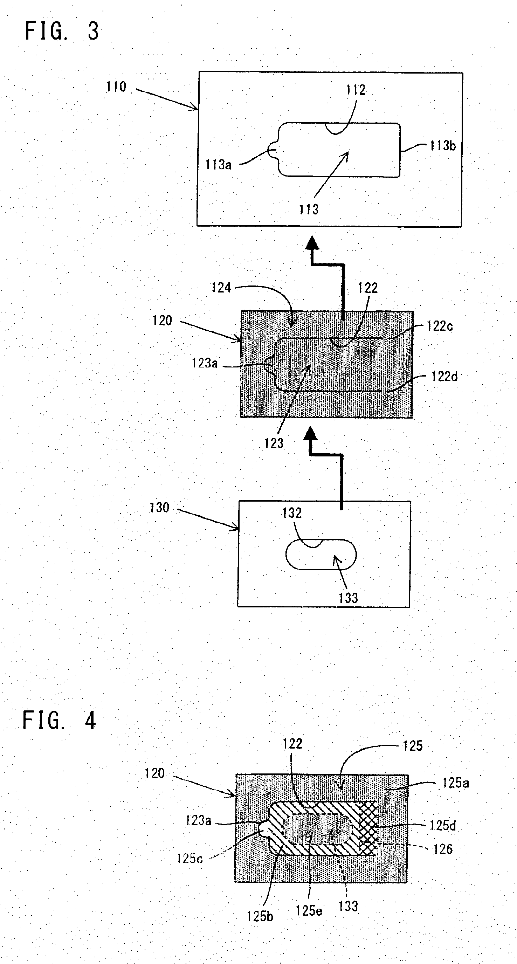

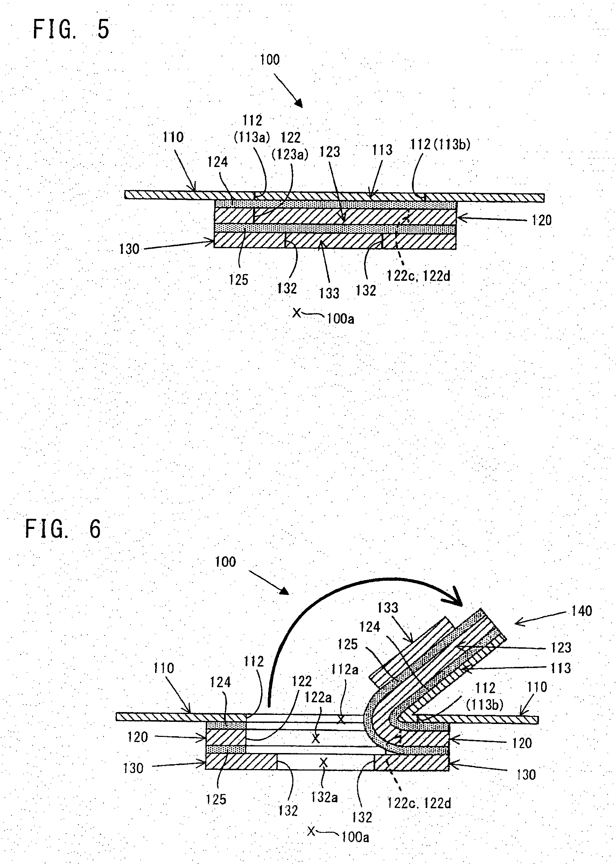

Representative embodiments according to the invention are now respectively explained with reference to the drawings. A representative package for storing wet tissues 10 for dispensation is provided as each of these embodiments. A package 100 of a first embodiment is now explained with reference to FIGS. 1 to 6. FIGS. 1 and 5 are a perspective view and a sectional view, respectively, showing the package 100 with an opening 132a closed. FIGS. 2 and 6 are a perspective view and a sectional view, respectively, showing the package 100 with the opening 132a opened. FIG. 3 shows a base sheet 110, an intermediate sheet 120 and an internal sheet 130. FIG. 4 shows a bonding side of the intermediate sheet 120.

Wet tissues 10 mean a sheet-type base material made of a fibrous material (cf. nonwoven fabric, gauze, cotton sheet, tissue paper) and impregnated with liquid (cf. alcohol, antiseptic solution, skin lotion). The wet tissues 10 are features that correspond to the "article" and the "sheet-type article" according to this invention.

The package 100 of this embodiment is formed by the base sheet 110, the intermediate sheet 120 and the internal sheet 130. The base sheet 110, the intermediate sheet 120 and the internal sheet 130 are features that correspond to the "first sheet", the "second sheet" and the "third sheet", respectively, according to this invention.

A body of the package 100 is formed by the base sheet 110 and has a wet-tissue storage space 100a in which the wet tissues 10 are stored. The wet-tissue storage space 100a is defined by an upper wall 100b and a lower wall 100c. The wet-tissue storage space 100a is a feature that corresponds to the "article storage space" according to this invention. The wet tissues 10 are stored in the wet-tissue storage space 100a such that the wet tissues 10 can be taken out through an opening 132a (122a, 112a) which is described below. For example, the wet tissues 10 are stored in the wet-tissue storage space 100a in the state in which the wet tissues 10 are individually folded and stacked one on the other. Preferably, the wet tissues 10 are stacked one on the other such that part of a folded portion of the uppermost wet tissue 10 (the wet tissue 10 facing the opening 132a) is located in a region of the opening 132a.

The base sheet 110 is formed, for example, of a heat-sealing film which can be fusion bonded by heating, or heat-sealed. In this embodiment, in which the heat-sealing film is used for packing the wet tissues 10, it is preferable to use the heat-sealing film which can hold the wet tissues 10 in wet condition or prevent drying. For example, a laminate film is used which includes a protective layer made of polyethylene terephthalate (PET) resin, a moisture keeping layer (drying prevention layer) made of aluminum, and a heat-sealing layer made of biaxial oriented polypropylene resin. In order to form the body by using the base sheet 110 of such a heat-sealing film, typically, the wet tissues 10 are wrapped with the base sheet 110, and edges of the base sheet 110 are overlapped with each other and then pressed and heated. Thus, the opposed upper and lower portions of the heat-sealing layer (biaxial oriented polypropylene resin layer) are melted and bonded together, so that a longitudinal sealing part (not shown) and lateral sealing parts 111a, 111b are formed. The longitudinal sealing part is formed on the underside of the body along the direction in which the base sheet 110 is fed during manufacturing of the body. The lateral sealing parts 111a, 111b are formed on edges of the base sheet 110 which are opposed to each other in the feeding direction of the base sheet 110, and extend along a direction transverse to the feeding direction of the base sheet 110.

The protective layer may be omitted. Further, the moisture keeping layer (drying prevention layer) is not limited to an aluminum layer, but includes any layers which can hold the wet tissues 10 in wet condition (prevent drying) within the wet-tissue storage space 100a. The heat-sealing layer is not limited to a biaxial oriented polypropylene resin layer, but includes any layers which can be heat-sealed.

The base sheet 110 has a cut 112 in a region corresponding to the upper wall 110b. A lid element 113 on the base sheet side (hereinafter referred to as a "first lid element") is formed by a region surrounded by the cut 112. Specifically, the cut 112 is formed along an outer edge of the first lid element 113. The cut 112 may be formed, for example, by holes (perforations) formed at certain intervals, a partly cut-off line (partly kept uncut) or a cut-off line (entirely cut). The perforations and the partly cut-off line are formed such that the outer edge of the first lid element 113 is separated from the base sheet 110 when an external force is applied to the first lid element 113 for the first time in a direction in which the first lid element 113 is separated from the base sheet 110. In this embodiment, the manner of forming the "cut" includes the manner of cutting in part and the manner of cutting in its entirety. The cut 112 formed in the base sheet 110 is a feature that corresponds to the "first cut" according to this invention.

The first lid element 113 has a tab portion 113a. The tab portion 113a is used as a tab for opening and closing the first lid element 113. Further, as described below, the first lid element 113 and the second lid element 123 are bonded together to form a lid 140, and the tab portion 113a is used as a tab for opening and closing the lid 140. The tab portion 113a of the first lid element 113 is a feature that corresponds to the "first tab portion" according to this invention.

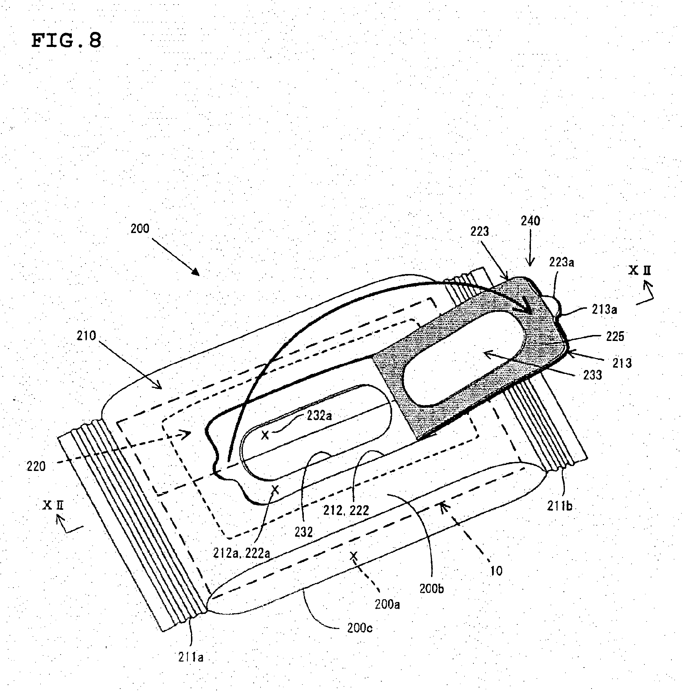

The cut 112 may be formed in either closed form or open form. The cut 112 of closed form is formed such that the first lid element 113 can be separated from the base sheet 110 (as shown in FIG. 3). The cut 112 of open form is formed such that part of the first lid element 113 is held connected to the base sheet 110 (as shown in FIG. 8). In this embodiment, as shown in FIG. 3, the cut 112 is closed. In this case, the first lid element 113 has the tab portion 113a and an end wall 113b.

In this specification, the description that "the cut formed in the sheet is closed" means that the cut is formed such that the whole region surrounded by the cut can be cut off from the sheet. Further, the description that "the cut formed in the sheet is open" means that the cut is formed such that part of the region surrounded by the cut is held connected to the sheet.

The intermediate sheet 120 is formed by a rigid sheet, such as a film or synthetic paper made of polypropylene (PP) resin or polyethylene terephthalate (PET) resin. The thickness of the intermediate sheet 120 is appropriately set.

The area of the intermediate sheet 120 is larger than the area of the first lid element 113 formed in the base sheet 110 (the area of the region surrounded by the cut 112). The intermediate sheet 120 has a cut 122. A lid element 123 on the intermediate sheet side (hereinafter referred to as a "second lid element") is formed by a region surrounded by the cut 122. Specifically, the cut 122 is formed along an outer edge of the second lid element 123. The cut 122 may be formed, for example, by perforations, a partly cut-off line or a cut-off line as described above in relation to the cut 112. In this embodiment, the cut 122 is formed by perforations. When an external force is applied to the second lid element 123 for the first time in a direction in which the second lid element 123 is separated from the intermediate sheet 120, areas between the perforations are cut and the outer edge of the second lid element 123 is separated from the intermediate sheet 120. The cut 122 formed in the intermediate sheet 120 is a feature that corresponds to the "second cut" according to this invention.

The second lid element 123 has a tab portion 123a. The tab portion 123a is used as a tab for opening and closing the second lid element 123. Further, the tab portion 123a is used as a tab for opening and closing the lid 140. The tab portion 123a of the second lid element 123 is a feature that corresponds to the "second tab portion" according to this invention.

Further, in this embodiment, as shown in FIG. 3, the cut 122 is open. Specifically, the cut 122 is formed between an end 122c and an end 122d. In this case, the second lid element 123 can be separated from the intermediate sheet 120 up to the ends 122c, 122d.

In this embodiment, as described below, the first lid element 113 and the second lid element 123 are bonded together to form the lid 140. Therefore, it is preferable that the first lid element 113 and the second lid element 123 have the same (or substantially the same) contour. For example, a region of the outer edge of the first lid element 113 except for a vicinity of the end wall 113b and a region of the outer edge of the second lid element 123 except for a vicinity of the ends 122c, 122d are identically shaped. The regions to be identically shaped may be appropriately selected such that the wet tissues 10 can be taken out through an opening 132a of the internal sheet 130 which is described below. Further, the distance between the tab portion 113a and the end wall 113b of the first lid element 113 is longer than the distance between the tab portion 123a and the end 122c (122d) of the second lid element 123.

The internal sheet 130 is formed by a rigid sheet, such as a film or synthetic paper made of polypropylene (PP) resin or polyethylene terephthalate (PET) resin. The thickness of the internal sheet 130 is appropriately set.

The area of the internal sheet 130 is larger than the area of the second lid element 123 of the intermediate sheet 120 (the area of the region surrounded by the cut 122). The internal sheet 130 has a cut 132. An opening formation piece 133 is formed by a region surrounded by the cut 132. Specifically, the cut 132 is formed along an opening edge of an opening 132a through which the wet tissues 10 can be taken out of the wet-tissue storage space 100a. The cut 132 is closed. The area of the opening 132a (the area of the region surrounded by the cut 132) is smaller than the area of the second lid element 123 formed in the intermediate sheet 120 (the area of the region surrounded by the cut 122). The cut 132 or the opening 132a can have various shapes or dimensions which allow the wet tissues 10 to be taken out of the wet-tissue storage space 100a, such as an elliptical shape, a circular shape and a rectangular shape. In this embodiment, the opening 132a has an elliptical shape. The cut 132 formed in the internal sheet 130 is a feature that corresponds to the "third cut" according to this invention.

The cut 132 may be formed, for example, by perforations, a partly cut-off line or a cut-off line as described above in relation to the cut 112. In this embodiment, the cut 132 is formed by perforations. When an external force is applied to the opening formation piece 133 for the first time in a direction in which the opening formation piece 133 is separated from the internal sheet 130, areas between the perforations are cut and the opening formation piece 133 is separated from the internal sheet 130.

One embodiment of a method of forming the package 100 by the base sheet 110, the intermediate sheet 120 and the internal sheet 130 is now explained.

In this embodiment, an adhesive is applied to the both sides of the intermediate sheet 120. In FIGS. 5 and 6, a first adhesive 124 is applied to one side of the intermediate sheet 120 and a second adhesive 125 is applied to the other side.

One side of the internal sheet 130 is bonded to the other side of the intermediate sheet 120 by the second adhesive 125. In this case, the internal sheet 130 and the intermediate sheet 120 are bonded together in the state in which the opening formation piece 133 (the opening 132a) which is surrounded by the cut 132 of the internal sheet 130 is positioned to be opposed to the second lid element 123 formed in the intermediate sheet 120 (the region surrounded by the cut 122). The second adhesive 125 can bond at least the second lid element 123 to the one side of the internal sheet 130 such that the second lid element 123 can be repeatedly peeled off. For example, a pressure sensitive adhesive is used. In this manner, the opening 132a formed in the internal sheet 132 can be opened and closed by the second lid element 123.

A method of bonding the other side of the intermediate sheet 120 to the one side of the internal sheet 130 such that the second lid element 123 can be peeled off is now explained with reference to FIG. 4. In the bonding method shown in FIG. 4, the second adhesive 125 is applied to the other side of the intermediate sheet 120, and in order to adjust the bonding strength (adhesion) of the adhesive, a medium such as acrylic resin and urethane resin is printed on a desired area on the side to which the second adhesive 125 has been applied.

In FIG. 4, on the side of the intermediate sheet 120 to which the second adhesive 125 is applied, the medium is not printed on an area 125a excluding the second lid element 123. Therefore, the area 125a excluding the second lid element 123 on the other side of the intermediate sheet 120 is securely bonded to the one side of the internal sheet 130 by the second adhesive 125.

Further, on the side of the intermediate sheet 120 to which the second adhesive 125 is applied, the medium is printed entirely on an area 125c corresponding to the tab portion 123a of the second lid element 123. Thus, in the region of the tab portion 123a of the second lid element 123, the other side of the intermediate sheet 120 is not bonded to the one side of the internal sheet 130. Therefore, the user can easily hold the tab portion 123a of the second lid element 123 (the tab portion of the lid 140 formed by the second lid element 123 and the first lid element 113) with the fingers, so that the second lid element 123 (the lid 140 formed by the second lid element 123 and the first lid element 113) can be easily peeled off from the internal sheet 130.

Further, on the side of the intermediate sheet 120 to which the second adhesive 125 is applied, the medium is printed on an area 125b corresponding to an opening-closing portion of the second lid element 123 and an area 125d corresponding to a proximal portion of the second lid element 123. The opening-closing portion (corresponding to the area 125b) of the second lid element 123 serves to open and close the opening 132a (the area surrounded by the cut 132) and has a larger area than the opening 132a. The proximal portion of the second lid element 123 (which corresponds to the area 125d) is configured as a portion which serves to prevent the second lid element 123 from being entirely peeled off from the internal sheet 130. The proximal portion of the second lid element 123 is formed on the side of the opening-closing portion (the area 125b facing the opening 132a) opposite from the tab portion 123a. The bonding strength (adhesion) in the area 125d corresponding to the proximal portion of the second lid element 123 is set to be higher than or equal to that of the area 125b corresponding to the opening-closing portion of the second lid element 123, or preferably, it is set to be higher. With such a higher bonding strength of the area 125d than the area 125b, when the user holds the tab portion with the fingers and opens the lid 140, the user can recognize by change of reaction force applied to the user's fingers that the lid 140 (the second lid element 123) has been peeled off up to a boundary between the opening-closing portion and the proximal portion. The bonding strength in the area 125b corresponding to the opening-closing portion of the second lid element 123 and the bonding strength in the area 125d corresponding to the proximal portion of the second lid element 123 can be adjusted, for example, by the size, width or pitch of dots or meshes of the medium to be printed. In order to set the bonding strength in the area 125d corresponding to the proximal portion of the second lid element 123 to be equal to that in the area 125b corresponding to the opening-closing portion of the second lid element 123, for example, the same dots or meshes are printed on the area 125d corresponding to the proximal portion and the area 125b corresponding to the opening-closing portion.

Further, preferably, the medium is not printed on an area 125e which faces the opening 132a of the internal sheet 130.

The one side of the intermediate sheet 120 is bonded to the back (the side facing the wet-tissue storage space 100a) of the base sheet 110 by the first adhesive 124. In this case, the intermediate sheet 120 and the base sheet 110 are bonded together in the state in which the tab portion 123a of the second lid element 123 formed in the intermediate sheet 120 is opposed to the tab portion 113a of the first lid element 113 formed in the base sheet 110. Various adhesives can be used as the first adhesive 124. An adhesive having a higher bonding strength (adhesion) than the second adhesive 125 is suitably used as the first adhesive 124, but the same pressure sensitive adhesive as the second adhesive 125 may be used. In this manner, the first lid element 113 and the second lid element 123 are bonded together. When the user holds the tab portion 113a of the first lid element 113 with the fingers and pulls it in a direction in which the first lid element 113 is separated from the base sheet 110, the second lid element 123 bonded to the first lid element 113 is pulled in a direction in which it is separated from the intermediate sheet 120.

Next, the operation of taking out the wet tissues 10 stored within the wet-tissue storage space 100a of the package 100 according to this embodiment is explained.

As shown in FIGS. 1 and 5, when the wet tissues 10 are not in use, the second lid element 123 is bonded to the one side of the internal sheet 130 by the second adhesive 125, and the first lid element 113 is bonded to the one side of the second lid element 123 by the first adhesive 124. Thus, the opening 132a formed in the internal sheet 130 is closed by the second lid element 123 (the lid 140 formed by the first lid element 113 and the second lid element 123).

In order to use the wet tissues 10, the user holds the tab portion 113a of the first lid element 113 (the tab portion of the lid 140) with the fingers and pulls it in a direction of the bold arrow shown in FIGS. 2 and 6. Then, the first lid element 113 (the second lid element 123 bonded to the first lid element 113) is separated beginning at the tab portion 113a toward the proximal portion 113 from the surface of the base sheet 110 (the side opposite to the wet-tissue storage space 100a). Thus, the second lid element 123 (the first lid element 113 bonded to the second lid element 123) is separated from the one side of the internal sheet 130 and the opening 132a is opened. When the second lid element 123 (the lid 140) is peeled off up to the boundary between the opening-closing portion and the proximal portion (the boundary between the areas 125b and 125d shown in FIG. 4), the reaction force applied to the user's fingers increases. Therefore, the user can recognize that the second lid element 123 (the lid 140) has been peeled off up to the proximal portion.

In this embodiment, the cut 112 formed in the base sheet 110 is closed, and the cut 122 formed in the intermediate sheet 120 is open. Further, the distance between the tab portion 113a and the end wall 113b of the first lid element 113 is longer than the distance between the tab portion 123a and the end 122c (122d) of the second lid element 123. Specifically, the ends 122c, 122d of the cut 122 are located closer to the tab portion 113a (123a) than the end wall 113b of the cut 112. Therefore, the instant when the second lid element 123 is separated (peeled off) up to the end 122c or 122d from the one side of the intermediate sheet 120 before the first lid element 113 is separated up to the end wall 113b from the surface of the base sheet 110, further separation is prevented. In this embodiment, the ends 122c, 122d in the intermediate sheet 120 serve as separation preventing parts for preventing further separation of the lid 140 (the first lid element 113 and the second lid element 123).

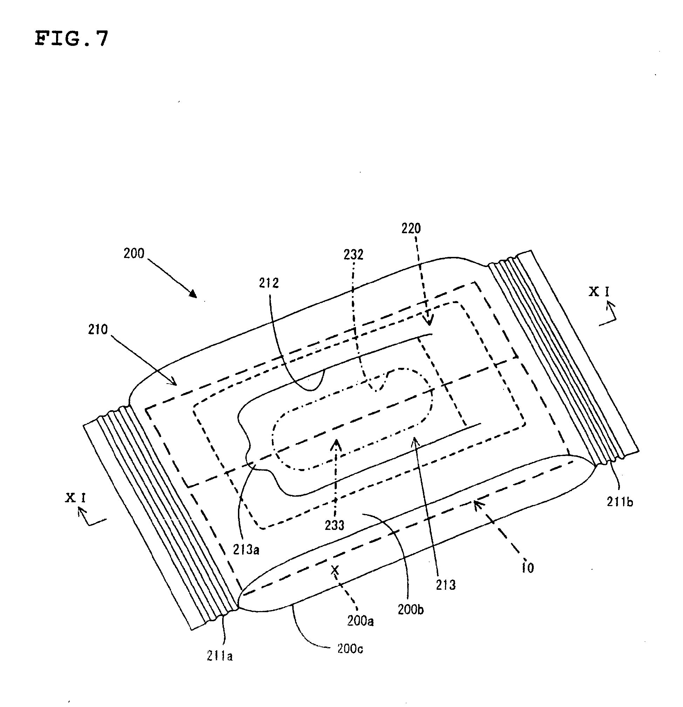

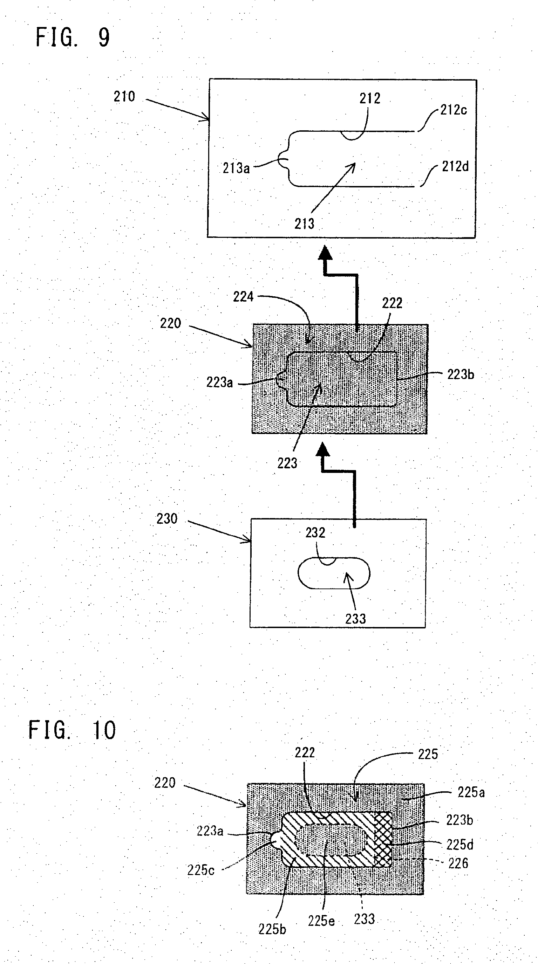

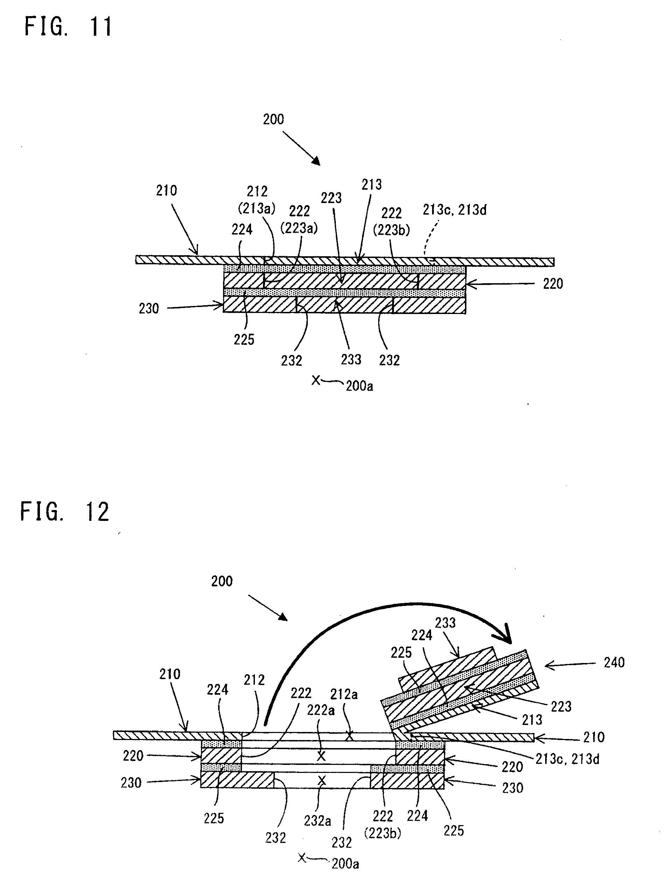

Although, in the first embodiment, the closed cut 112 is formed in the base sheet 110 and the open cut 122 is formed in the intermediate sheet 120, the configurations of the cuts 112, 122 are not limited to this. Now, a package 200 of a second embodiment is explained with reference to FIGS. 7 to 12. FIGS. 7 and 11 are a perspective view and a sectional view, respectively, showing the package 200 with an opening 232a closed. FIGS. 8 and 12 are a perspective view and a sectional view, respectively, showing the package 200 with the opening 232a opened. FIG. 9 shows a base sheet 210, an intermediate sheet 220 and an internal sheet 230.

The package 200 of this embodiment is formed by the base sheet 210, the intermediate sheet 220 and the internal sheet 230. FIG. 10 shows a bonding side of the intermediate sheet 220. In FIGS. 7 to 12, components or elements corresponding to those of the first embodiment are given like numerals excluding the hundreds place digit.

The same sheet as the base sheet 110 in the first embodiment can be used as the base sheet 210. A body of the package 200 is formed by the base sheet 210 and has a wet-tissue storage space 200a for storing the wet tissues 10. The wet-tissue storage space 200a is defined by an upper wall 200b and a lower wall 200c.

The base sheet 210 has a cut 212 in a region corresponding to the upper wall 210b. A lid element 213 on the base sheet side (a first lid element) is formed by a region surrounded by the cut 212. The cut 212 may be formed, for example, by perforations, a partly cut-off line or a cut-off line. The first lid element 213 has a tab portion 213a.

In this embodiment, as shown in FIG. 9, the cut 212 is open. Specifically, the cut 212 is formed between an end 212c and an end 212d. In this case, the first lid element 213 can be separated from the base sheet 210 up to the ends 212c, 212d.

The same sheet as the intermediate sheet 120 in the first embodiment can be used as the intermediate sheet 220. The area of the intermediate sheet 220 is larger than the area of the first lid element 213 formed in the base sheet 210. The intermediate sheet 220 has a cut 222. A lid element 223 on the intermediate sheet side (a second lid element) is formed by a region surrounded by the cut 222. The cut 222 may be formed, for example, by perforations, a partly cut-off line or a cut-off line. In this embodiment, the cut 222 is formed by perforations.

In this embodiment, as shown in FIG. 9, the cut 222 is closed. In this case, the second lid element 223 has a tab portion 223a and an end wall 223b.

In this embodiment, the first lid element 213 and the second lid element 223 are bonded together to form the lid 240. Therefore, it is preferable that the first lid element 213 and the second lid element 223 have the same (or substantially the same) contour. For example, a region of the outer edge of the first lid element 213 except for the vicinity of the ends 212c, 212d and a region of the outer edge of the second lid element 223 except for the vicinity of the end wall 223b are identically shaped. Further, preferably, the distance between the tab portion 213a and the end 212c (212d) of the first lid element 213 is longer than the distance between the tab portion 223a and the end wall 223b of the second lid element 223.

The same sheet as the internal sheet 130 in the first embodiment can be used as the internal sheet 230. The area of the internal sheet 230 is larger than the area of the second lid element 223 of the intermediate sheet 220. The internal sheet 230 has a cut 232. An opening formation piece 233 is formed by a region surrounded by the cut 232. Specifically, the cut 232 is formed along an opening edge of an opening 232a through which the wet tissues 10 can be taken out of the wet-tissue storage space 200a. The cut 232 is closed. The area of the opening 232a is smaller than the area of the second lid element 223 formed in the intermediate sheet 220. The cut 232 may be formed, for example, by perforations, a partly cut-off line or a cut-off line. In this embodiment, the cut 232 is formed by perforations.

The above-described method can be used as a method of forming the package 200 by the base sheet 210, the intermediate sheet 220 and the internal sheet 230.

A first adhesive 224 is applied to one side of the intermediate sheet 220 and a second adhesive 225 is applied to the other side. By the first and second adhesives 224, 225, the one side of the intermediate sheet 220 is bonded to the back of the base sheet 210, and one side of the internal sheet 230 is bonded to the other side of the intermediate sheet 220. In this bonding, the opening formation piece 233 (the opening 232a) formed in the internal sheet 230 is positioned to be opposed to the second lid element 223 formed in the intermediate sheet 220, and the tab portion 223a of the second lid element 223 formed in the intermediate sheet 220 is positioned to be opposed to the tab portion 213a of the first lid element 213 formed in the base sheet 210. In this state, the internal sheet 230, the intermediate sheet 220 and the base sheet 210 are bonded together.

Further, the operation of taking out the wet tissues 10 stored within the wet-tissue storage space 200a of the package 200 according to this embodiment is similar to that for the package 100 of the first embodiment.

In this embodiment, the base sheet 210 has the closed cut 212, and the intermediate sheet 220 has the open cut 222. Further, the distance between the tab portion 213a and the end 212c (212d) of the first lid element 213 is longer than the distance between the tab portion 223a and the end wall 223b of the second lid element 223. Therefore, when the lid 240 (the first lid element 213 and the second lid element 223) is opened (peeled) up to the end 212c or 212d, the end wall 223b functions as a pivot of a hinge structure. As a result, when the lid 240 (the first lid element 213 and the second lid element 223) is opened up to the end wall 223b, a force of the lid to return in a direction (closing direction) that closes the opening 232a is weakened. Therefore, it is not necessary to hold the lid 240 by hand when taking out the wet tissues 10 through the opening 232a. Thus, the ease of operation of taking out the wet tissues 10 is improved. Further, in this embodiment, the ends 212c, 212d in the base sheet 220 serve as separation preventing parts for preventing further separation of the lid 240 (the first lid element 213 and the second lid element 223).

Next, the operation of taking out the wet tissues 10 stored within the wet-tissue storage space 200a of the package 200 according to this embodiment is explained.

As shown in FIGS. 7 and 11, when the wet tissues 10 are not in use, the second lid element 223 is bonded to the one side of the internal sheet 230 by the second adhesive 225, and the first lid element 213 is bonded to the one side of the second lid element 223 by the first adhesive 224. Thus, the opening 232a formed in the internal sheet 230 is closed by the second lid element 223 (the lid 240 formed by the first lid element 213 and the second lid element 223).

In order to use the wet tissues 10, the user holds the tab portion 213a of the first lid element 213 (the tab portion of the lid 240) with the fingers and pulls it in a direction of the bold arrow shown in FIGS. 8 and 12. Then, the first lid element 213 (the second lid element 223 bonded to the first lid element 213) is peeled off beginning at the tab portion 213a. Thus, the second lid element 223 (the first lid element 213 bonded to the second lid element 223) is separated from the one side of the internal sheet 230 and the opening 232a is opened. When the second lid element 223 (the lid 240) is peeled off up to the boundary between an opening-closing portion and a proximal portion (the boundary between an area 225b and an area 225d which are shown in FIG. 10), the reaction force applied to the user's fingers increases. Therefore, the user can recognize that the second lid element 223 (the lid 240) has been peeled off up to the proximal portion.

When the second lid element 223 (the lid 240) is further opened until the second lid element 223 is peeled off up to the end wall 223b, the end wall 223b functions as a pivot of a hinge structure. In this case, a force of the second lid element 223 (the lid 240) to return in the closing direction is weakened. Even if the force of pulling the tab portion of the lid 240 (the first tab portion 213a and the second tab portion 223a) is released, the lid 240 (the first lid element 213 and the second lid element 223) is held in a position to open the opening 232a. Therefore, in this embodiment, the wet tissues 10 can be taken out of the wet-tissue storage space 200a by one hand.

In this embodiment, the cut 212 formed in the base sheet 210 is open, and the cut 222 formed in the intermediate sheet 220 is closed. Further, the distance between the tab portion 213a and the end 212c (212d) of the first lid element 213 is longer than the distance between the tab portion 223a and the end wall 223b of the second lid element 223. Specifically, the end wall 223b of the cut 222 is located closer to the tab portion 223a (213a) than the ends 212c, 212d of the cut 212. Therefore, even if the second lid element 223 is peeled off up to the end wall 223b, the lid 240 is held connected to the base sheet 210 by the first lid element 213. Further, the ends 212c, 212d in the base sheet 210 serve as separation preventing parts for preventing further separation of the lid 240 (the first lid element 213 and the second lid element 223).

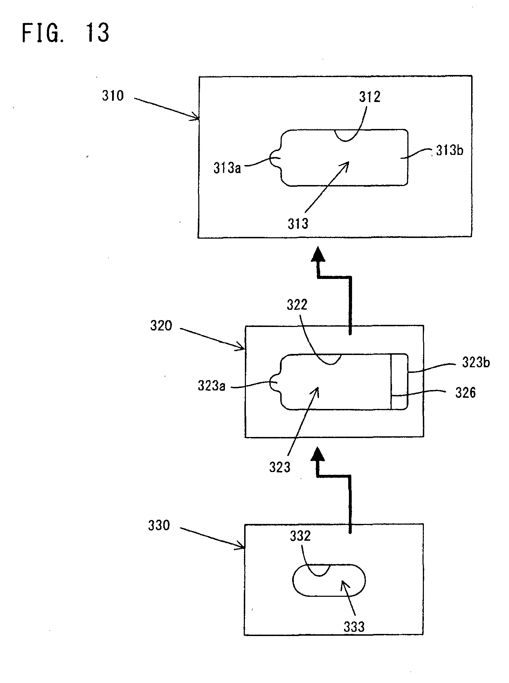

A package of a third embodiment is now explained with reference to FIG. 13. A base sheet 310, an intermediate sheet 320 and an internal sheet 330 which form the package of this embodiment are formed as shown in FIG. 13. The same sheets as the base sheet 110, the intermediate sheet 120 and the internal sheet 130 in the first embodiment can be used as the base sheet 310, the intermediate sheet 320 and the internal sheet 330, respectively, in this embodiment.

In this embodiment, the base sheet 310 has a closed cut 312, and the intermediate sheet 320 has a closed cut 322. Further, in a second lid element 323, a slit (continuous slit) 326 is formed between a tab portion 323a and an end wall 323b and extends parallel (or substantially parallel) to the end wall 323b. The slit 326 is formed on the side of an area facing an opening 332a of the internal sheet 330 (the above-described opening-closing portion) opposite from the tab portion 323a. The slit 326 is formed by a groove having a depth smaller than the thickness of the intermediate sheet 320. The slit 326 is preferably formed along the above-described boundary between the opening-closing portion and the proximal portion (the boundary between the areas 125b, 125d in FIG. 4).

Further, the distance between a tab portion 313a and an end wall 313b of a first lid element 313 is equal (or substantially equal) to the distance between the tab portion 323a and the end wall 323b of the second lid element 323.

In this embodiment, when a lid (the first lid element 313 and the second lid element 323) is opened (peeled) up to the slit 326, the slit 326 functions as a pivot of a hinge structure. As a result, when the lid (the first lid element 313 and the second lid element 323) is opened up to the slit 326, a force of the lid to return in a direction (closing direction) that closes the opening 332a is weakened. Therefore, like in the second embodiment, the ease of operation of taking out the wet tissues 10 is improved.

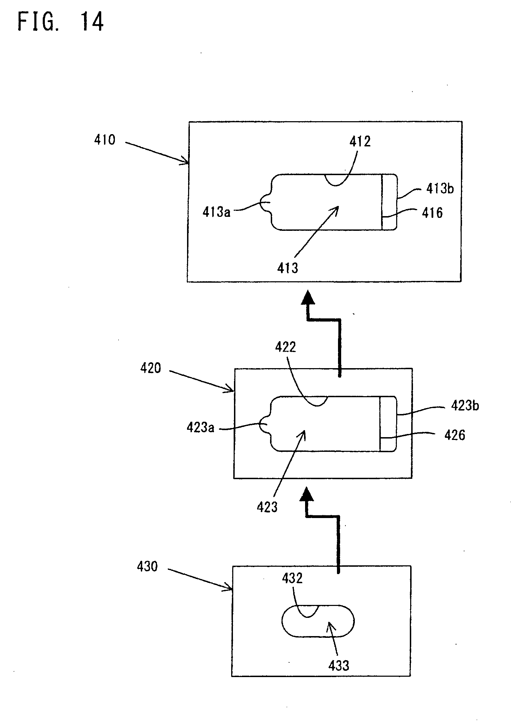

A package of a fourth embodiment is now explained with reference to FIG. 14. A base sheet 410, an intermediate sheet 420 and an internal sheet 430 which form the package of this embodiment are formed as shown in FIG. 14. The same sheets as the base sheet 110, the intermediate sheet 120 and the internal sheet 130 in the first embodiment can be used as the base sheet 410, the intermediate sheet 420 and the internal sheet 430, respectively, in this embodiment.

In this embodiment, the base sheet 410 has a closed cut 412, and the intermediate sheet 420 has a closed cut 422. Further, in a first lid element 413, a slit (continuous slit) 416 is formed between a tab portion 413a and an end wall 413b and extends parallel (or substantially parallel) to the end wall 413b. The slit 416 is formed on the side of an area facing an opening 432a of the internal sheet 430 (the above-described opening-closing portion) opposite from the tab portion 413a. Further, in a second lid element 423, a slit (continuous slit) 426 is formed between a tab portion 423a and an end wall 423b and extends parallel (or substantially parallel) to the end wall 423b. The slit 426 is formed on the side of an area facing an opening 432a of the internal sheet 430 (the above-described opening-closing portion) opposite from the tab portion 423a. The slit 426 is preferably formed along the above-described boundary between the opening-closing portion and the proximal portion (the boundary between the areas 125b, 125d in FIG. 4).

Further, the distance between the tab portion 413a and the end wall 413b of the first lid element 413 is equal (or substantially equal) to the distance between the tab portion 423a and the end wall 423b of the second lid element 423. Further, the distance between the tab portion 413a and the slit 416 of the first lid element 413 is equal (or substantially equal) to the distance between the tab portion 423a and the slit 426 of the second lid element 423. Specifically, in this embodiment, the slit 416 of the first lid element 413 and the slit 426 of the second lid element 423 are formed to be opposed to each other.

In this embodiment, when a lid (the first lid element 413 and the second lid element 423) is opened (peeled) up to the slit 416 (426), the slits 416, 426 function as a pivot of a hinge structure. As a result, when the lid (the first lid element 413 and the second lid element 423) is opened up to the slit 416 (426), a force of the lid to return in a direction (closing direction) that closes the opening 432a is weakened. Therefore, the ease of operation of taking out the wet tissues 10 is further improved.

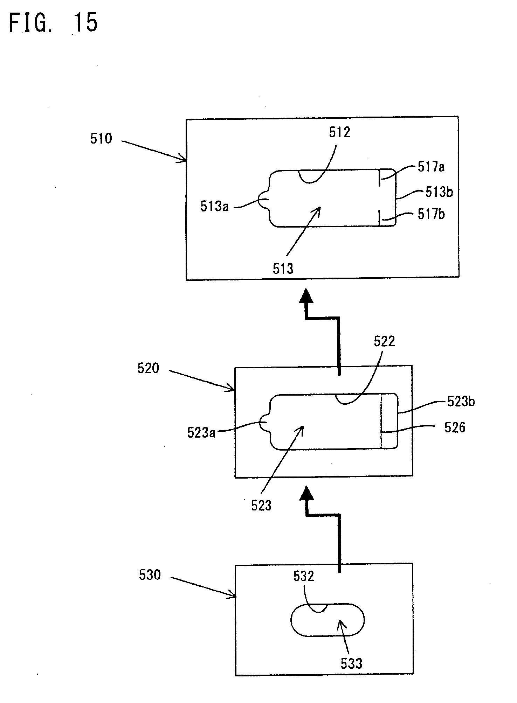

A package of a fifth embodiment is now explained with reference to FIG. 15. A base sheet 510, an intermediate sheet 520 and an internal sheet 530 which form the package of this embodiment are formed as shown in FIG. 15. The same sheets as the base sheet 110, the intermediate sheet 120 and the internal sheet 130 in the first embodiment can be used as the base sheet 510, the intermediate sheet 520 and the internal sheet 530, respectively, in this embodiment.

In this embodiment, the base sheet 510 has a closed cut 512, and the intermediate sheet 520 has a closed cut 522. Further, in a first lid element 513, a plurality of slits (split slits) are formed between a tab portion 513a and an end wall 513b and extends parallel (or substantially parallel) to the end wall 513b. In this embodiment, slits (split slits) 517a, 517b are formed on both ends of a line parallel to the end wall 513b. The slits 517a, 517b are formed on the side of an area facing an opening 532a of the internal sheet 530 (the above-described opening-closing portion) opposite from the tab portion 513a.

Further, in a second lid element 523, a slit (continuous slit) 526 is formed between a tab portion 523a and an end wall 523b and extends parallel (or substantially parallel) to the end wall 523b. The slit 526 continuously extends between its ends. The slit 526 is formed on the side of an area facing an opening 532a of the internal sheet 530 (the above-described opening-closing portion) opposite from the tab portion 523a. The slit 526 is preferably formed along the above-described boundary between the opening-closing portion and the proximal portion (the boundary between the areas 125b, 125d in FIG. 4).

Further, the distance between the tab portion 513a and the end wall 513b of the first lid element 513 is equal (or substantially equal) to the distance between the tab portion 523a and the end wall 523b of the second lid element 523. Further, the distance between the tab portion 513a and the slit 517a (517b) of the first lid element 513 is equal (or substantially equal) to the distance between the tab portion 523a and the slit 526 of the second lid element 523. Specifically, in this embodiment, the slit 517a (517b) of the first lid element 513 and the slit 526 of the second lid element 523 are formed to be opposed to each other.

In this embodiment, when a lid (the first lid element 513 and the second lid element 523) is opened (peeled) up to the slits 517a (517b), 526, the slits 517a (517b) and 526 function as a pivot of a hinge structure. As a result, like in the fourth embodiment, when the lid (the first lid element 513 and the second lid element 523) is opened up to the slits 517a (517b) and 526, a force of the lid to return in a direction (closing direction) that closes the opening 532a is weakened. Therefore, the ease of operation of taking out the wet tissues 10 is further improved.

Further, in this embodiment, due to provision of the plurality of slits (split slits) 517a, 517b spaced apart from each other in the first lid element 513, the first lid element 513 has a higher strength than that of the fourth embodiment.

In place of the slit (continuous slit) 526 of the second lid element 523, split slits may be formed. Specifically, a continuous slit may be formed in one of the first lid element 513 and the second lid element 523 and split slits may be formed in the other, or split slits may be formed in both of the first and second lid elements 513, 523.

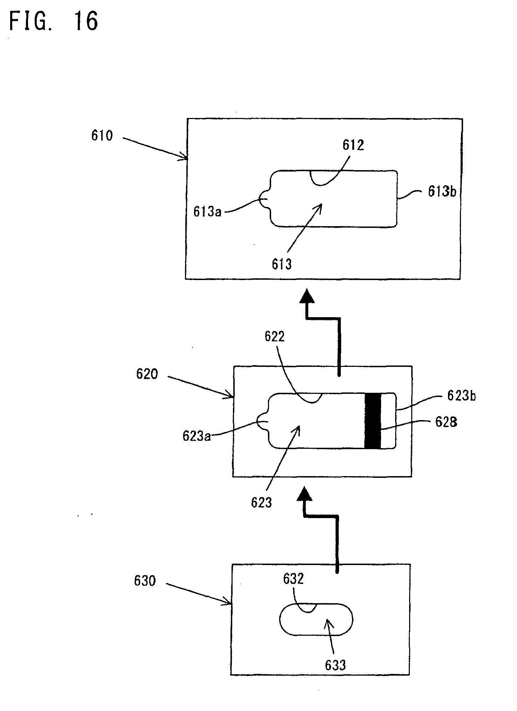

A package of a sixth embodiment is now explained with reference to FIGS. 16 to 18. A base sheet 610, an intermediate sheet 620 and an internal sheet 630 which form the package of this embodiment are formed as shown in FIG. 16. The same sheets as the base sheet 110, the intermediate sheet 120 and the internal sheet 130 in the first embodiment can be used as the base sheet 610, the intermediate sheet 620 and the internal sheet 630, respectively, in this embodiment.

In this embodiment, the base sheet 610 has a closed cut 612, and the intermediate sheet 620 has a closed cut 622. Further, in a second lid element 623, a void 628 is provided between a tab portion 623a and an end wall 623b. The void 628 is formed on the side of an area facing an opening 632a of the internal sheet 630 (the above-described opening-closing portion) opposite from the tab portion 623a. The void 628 is preferably formed in a position corresponding to the above-described boundary between the opening-closing portion and the proximal portion (the boundary between the areas 125b, 125d in FIG. 4). For example, one edge of the void 628 which faces the end wall 623b or the other edge which faces away from the end wall 623b is formed in a position corresponding to the boundary between the opening-closing portion and the proximal portion. In this embodiment, the void 628 has a predetermined width along an open direction of the second lid element 623. The open direction of the second lid element 623 means a direction in which the second lid element 623 is peeled off from the internal sheet 630 when the user holds the tab portion 623a with the fingers and pulls it in a direction that opens the opening 632a.

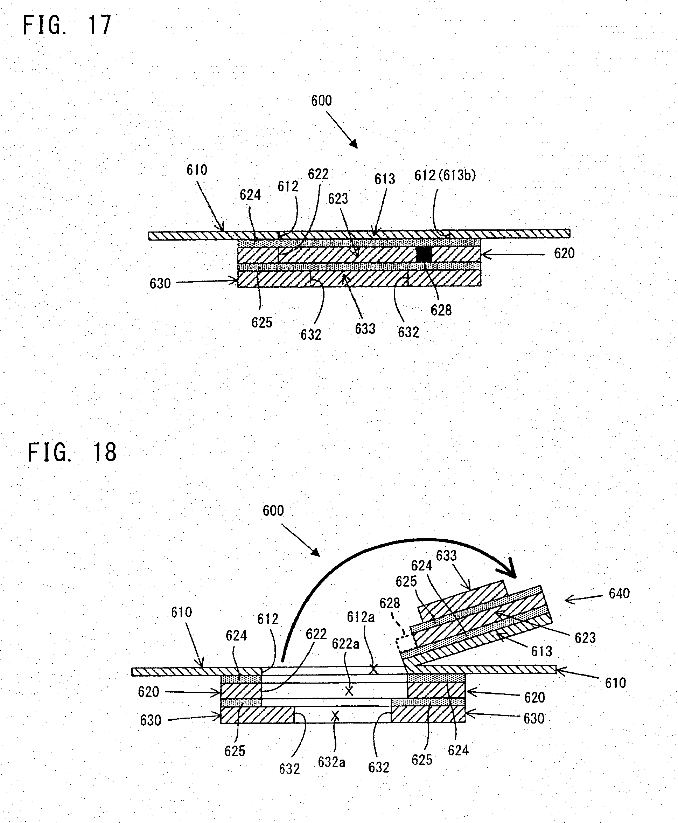

In this embodiment, when a lid (the first lid element 613 and the second lid element 623) is opened (peeled) up to the void 626, the edge of the void 626 which faces the end wall 623b functions as a pivot of a hinge structure (see FIG. 18). At this time, due to the existence of the void 626, the strength of the hinge structure is reduced, so that a force of the lid to return in a direction (closing direction) that closes the opening 332a is further weakened. Therefore, the ease of operation of taking out the wet tissues 10 is further improved.

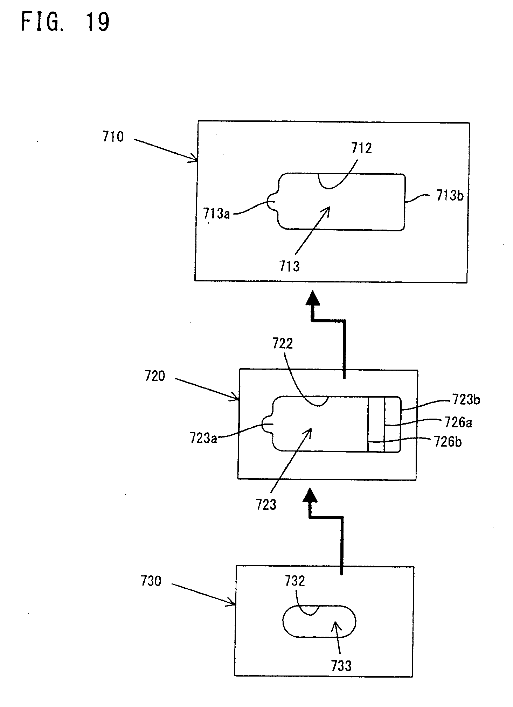

A package of a seventh embodiment is now explained with reference to FIG. 19. A base sheet 710, an intermediate sheet 720 and an internal sheet 730 which form the package of this embodiment are formed as shown in FIG. 19. The same sheets as the base sheet 110, the intermediate sheet 120 and the internal sheet 130 in the first embodiment can be used as the base sheet 710, the intermediate sheet 720 and the internal sheet 730, respectively, in this embodiment.

In this embodiment, the base sheet 710 has a closed cut 712, and the intermediate sheet 720 has a closed cut 722. Further, in a second lid element 723, a plurality of slits (continuous slits) 726 are formed between a tab portion 723a and an end wall 723b and extends in a direction transverse to the open direction of the second lid element 723 with a predetermined spacing therebetween in the open direction of the second lid element 723. In this embodiment, slits (continuous slits) 726a, 726b are formed in parallel (or substantially in parallel) to the end wall 723b. The slits 726a, 726b are formed on the side of an area facing an opening 732a of the internal sheet 730 (the above-described opening-closing portion) opposite from the tab portion 723a. The slits 726a, 726b are preferably formed in a position corresponding to the above-described boundary between the opening-closing portion and the proximal portion (the boundary between the areas 125b, 125d in FIG. 4). For example, one of the slits 726a, 726b is formed in a position corresponding to the above-described boundary between the opening-closing portion and the proximal portion.

In this embodiment, when a lid (the first lid element 713 and the second lid element 723) is opened (peeled) up to the slit 726a, the slit 726a functions as a pivot of a hinge structure, and a force of the lid to return in a direction (closing direction) that closes the opening 732a is weakened. When the lid (the first lid element 713 and the second lid element 723) is further opened (peeled) up to the slit 726b, the slit 726b functions as a pivot of a hinge structure, and a force of the lid to return in the direction (closing direction) that closes the opening 732a is further weakened. In this embodiment, the slit 726a is formed closer to the tab portion723a than the slit 726b, so that the force of the lid to return in the direction (closing direction) that closes the opening 732a is further weakened. Therefore, the ease of operation of taking out the wet tissues 10 is further improved. Further, unlike the sixth embodiment, a void is not provided between the slits 726a, 726b, so that the sheet having no such irregularities can be processed with higher accuracy.

In the case of a sheet having a lid element which is formed by a cut of an open form, if a lid is further pulled after the lid is peeled up to an end of the cut, the end of the cut may get damaged. Therefore, preferably, a separation preventing part is provided on the end of the cut. FIG. 20 shows a modification in which a separation preventing part is provided on the end of the cut. In the modification shown in FIG. 20, a base sheet 810 has an open cut 812. Ends of the cut 812 are bent toward each other and form curved separation preventing parts 813e, 813f. In this manner, the ends of the cut 813 can be increased in strength and can be prevented from getting damaged.

FIG. 21 shows another modification in which a separation preventing part is provided on the end of the cut. In the modification shown in FIG. 21, the base sheet 810 has the open cut 812. Separation preventing parts 813g, 813h are formed in the form of notches recessed toward each other on the ends of the cut 812. When the lid is peeled up to the separation preventing parts (notches), the reaction force applied to the user's fingers decreases. Therefore, the user can recognize that the lid has been peeled off up to the vicinity of the separation preventing parts (notches), and can stop pulling the lid.

FIG. 22 shows another modification in which a separation preventing part is provided on the end of the cut. In the modification shown in FIG. 22, the base sheet 810 has the open cut 812. Oblique parts 813j, 813m inclined toward each other and separation preventing parts 813k, 813n in the form of notches recessed toward each other are formed on the ends of the cut 812. When the lid is peeled up to the oblique parts 813j, 813m, the reaction force applied to the user's fingers decreases. When the lid is further peeled up to the notches 813k, 813n, the reaction force applied to the user's fingers further decreases. Therefore, the user can reliably recognize that the lid has been peeled off up to the vicinity of the separation preventing parts (notches).

As described above, in this invention, part of the base sheet is used as a lid, and the internal sheet having an opening is provided on the back of the base sheet. Therefore, it is necessary for decorative design on the package to be provided only on the surface of the base sheet, so that the freedom of the decorative design to be provided on the package can be enhanced. Further, due to fewer irregularities on the surface of the base sheet, the appearance of the package is improved. Further, due to provision of the intermediate sheet having part of the lid between the base and the internal sheet having the opening, the strength of the periphery of the opening is increased, and the strength of the lid is also increased.

The invention is not limited to the constructions that have been described as the representative embodiments, but rather, may be added to, changed, replaced with alternatives or otherwise modified.

Various materials and shapes can be selected for the base sheet (first sheet), the Intermediate sheet (second sheet) and the internal sheet (third sheet).

As a method of bonding the base sheet (first sheet), the intermediate sheet (second sheet) and the internal sheet (third sheet), various bonding methods can be used in which at least the second lid element formed in the intermediate sheet (second sheet) can be peeled off from the internal sheet (third sheet).

Various shapes can be selected for the lid and the opening.

As cuts for forming the lid elements and the opening, an open cut or a closed cut can be appropriately selected.

Each of the features or structures explained in the embodiments can be used individually or in combination of appropriately selected ones.

The sheet-type article to be stored in the package is not limited to wet tissues.

### Description of Numerals

100, 200 package
100a, 200a wet-tissue storage space (article storage space)
100b, 200b upper wall
100c, 200c lower wall
110, 210, 310, 410, 510, 610, 710, 810 base sheet (first sheet)
111a, 111b, 211a, 211b lateral sealing part
112,212,312,412,512,612,712,812 cut (first cut)
112a, 212a, 612a opening
113, 213, 313, 413, 513, 613, 71*3,* 813 first lid element
113a, 213a, 313a, 413a, 513a, 613a, 713a, 813a tab portion (first tab portion)
113b, 223b, 313b, 323b, 413b, 423b, 513b, 523b, 613b, 623b, 713b, 723b end wall
120, 220, 320, 420, 520, 620, 270 intermediate sheet (second sheet)
122, 222, 322, 422, 522, 622, 722 cut (second cut)
122a, 622a opening
122b, 122c, 212c, 212d end
123, 223, 323, 423, 523, 623, 723 second lid element
123a, 223a, 323a, 423a, 523a, 623a, 723a tab portion (second tab portion)
124, 224, 624 first adhesive
125, 225, 625 second adhesive
130, 230, 330, 430, 530, 630, 730 internal sheet (third sheet)
132, 232, 332, 432, 532, 632, 732 cut (third cut)
132a, 232a, 632a opening
133, 233, 333, 433, 533, 633, 733 opening formation piece
140, 240, 640 lid
324,414,424, 515a, 515b, 524, 727a, 727b slit
326, 416, 426, 526, 726a, 726b slit (continuous slit)
517a, 517b slit (split slit)
626 void
813e, 813f, 813g, 813h, 813k, 813n notch (separation preventing part)
813j, 813m oblique part

## Claims

1. A package (100) comprising:
an article storage space (100a) formed by a first sheet (110),
an opening (132a) through which an article (10) stored within the article
storage space (100a) is taken out,
and
a lid (140) for opening and closing the opening (132a),
wherein:
the lid (140) includes a first lid element (113) and a second lid element (123),
the package (100) further comprises a second sheet (120) and a third sheet (130),
the first lid element (113) is formed in the first sheet (110),
the second lid element (123) is formed in the second sheet (120),
the opening (132a) is formed in the third sheet (130), and
one side of the second sheet (120) is bonded to a side of the first sheet (110) which faces the article storage space (100a) in the state in which the second lid element (123) formed in the second sheet (120) is positioned to be opposed to the first lid element (113) formed in the first sheet (110), and the other side of the second sheet (120) is bonded to one side of the third sheet (130) such that at least the second lid element (123) can be peeled off in the state in which the opening (132a) formed in the third sheet (130) is positioned to be opposed to the second lid element (123) formed in the second sheet (120),
wherein the first lid element (113) has a first tab portion (113a) and an end wall (113b) opposite from said first tab portion (113a) **characterised in that** the second lid element (123) has a second tab portion (123a) and an end (122c, 122d) opposite from said second tab portion (123a); and
the distance between the first tab portion (113a) and the end wall (113b) of the first lid element (113) is longer than the distance between the second tab portion (123a) and the end (122c, 122d) of the second lid element (123) such that said end (122c, 122d) is located closer to the first tab portion (113a) than the end wall (113b).

2. The package as defined in claim 1, wherein one side of the second sheet (120) is bonded to a side of the first sheet (110) which faces the article storage space (100a) in the state in which the second tab portion (123a) of the second lid element (123) is positioned to be opposed to the first tab portion (113a) of the first lid element (113).

3. The package as defined in claim 1 or 2, wherein a region which is surrounded by a first cut (112) formed in the first sheet (110) is used as the first lid element (113) and a region which is surrounded by a second cut (122) formed in the second sheet (120) is used as the second lid element (123), and at least one of the first cut (112) and the second cut (122) is closed.

4. The package as defined in claim 2, wherein a region which is surrounded by a first cut (112) formed in the first sheet (110) is used as the first lid element (113) and a region which is surrounded by a second cut (122) formed in the second sheet (120) is used as the second lid element (123), and at least one of the first cut (112) and the second cut (122) is open on a side of a region facing the opening (132a) opposite from at least one of the first tab portion (113a) and the second tab portion (123a).

5. The package as defined in claim 3 or 4, wherein the second lid element (123) has an opening-closing portion (125b) for opening and closing the opening (132a) formed in the third sheet (130) and a proximal portion (125d) formed on a side of the opening-closing portion (125b) opposite from the second tab portion (123a), and wherein the other side of the second sheet (120) is bonded to the one side of the third sheet (130) such that a region of the second tab portion (123a) is not bonded and bonding strength in a region of the proximal portion (125d) is equal to or higher than that in a region of the opening-closing portion (125b).

6. The package as defined in claim 4 or 5, wherein at least one of the first cut (112) and the second cut (122) has ends shaped to prevent separation.

7. The package as defined in any one of claims 2 to 6, wherein at least one of the first lid element (113) and the second lid element (123) has a slit (326) which is formed on a side of a region facing the opening (132a) opposite from at least one of the first tab portion (113a) and the second tab portion (123a) and extends in a direction transverse to a direction in which the at least one of the first lid element (113) and the second lid element (123) is peeled off.

8. The package as defined in claim 7, wherein at least one of the first lid element (113) and the second lid element (123) has a plurality of slits (517a, 517b) spaced apart from each other and extending in a direction transverse to said peeling direction.

9. The package as defined in claim 7, wherein the second lid element (123) has a plurality of slits (517a, 517b) which are formed on aside of the region facing the opening (132a) opposite from the second tab portion (123a) and spaced apart from each other in the direction in which the second lid element (123) is peeled off, and extend in a direction transverse to the peeling direction of the second lid element (123).

10. The package as defined in any one of claims 2 to 6, wherein the second lid element (123) has a void (626) which is formed on a side of the region facing the opening (132a) opposite from the second tab portion (123a) and extends in a direction transverse to the direction in which the second lid element (123) is peeled off.

## Patentansprüche

1. Packung (100), umfassend:
einen Artikelaufbewahrungsraum (100a), der von einer ersten Folie (110) gebildet wird,
eine Öffnung (132a), durch die ein in dem Artikelaufbewahrungsraum (100a) aufbewahrter Artikel (10) entnommen wird,
und
einen Deckel (140) zum Öffnen und Schließen der Öffnung (132a),
wobei
der Deckel (140) ein erstes Deckelelement (113) und ein zweites Deckelelement (123) aufweist,
die Packung (100) ferner eine zweite Folie (120) und eine dritte Folie (130) umfasst,
das erste Deckelelement (113) in der ersten Folie (110) ausgebildet ist,
das zweite Deckelelement (123) in der zweiten Folie (120) ausgebildet ist,
die Öffnung (132a) in der dritten Folie (130) ausgebildet ist, und
eine Seite der zweiten Folie (120) mit einer Seite der ersten Folie (110) verbunden ist, die in dem Zustand, in dem das in der zweiten Folie (120) ausgebildete zweite Deckelelement (123) so angeordnet ist, dass es dem in der ersten Folie (110) ausgebildeten ersten Deckelelement (113) gegenüberliegt, zu dem Artikelaufbewahrungsraum (100a) zeigt, und die andere Seite der zweiten Folie (120) mit einer Seite der dritten Folie (130) verbunden ist, so dass mindestens das zweite Deckelelement (123) in dem Zustand, in dem die in der dritten Folie (130) ausgebildete Öffnung (132a) so angeordnet ist, dass sie dem in der zweiten Folie (120) ausgebildeten zweiten Deckelelement (123) gegenüberliegt, abgezogen werden kann,
wobei das erste Deckelelement (113) einen ersten Laschenteil (113a) und eine Stirnwand (113b) gegenüber dem ersten Laschenteil (113a) hat,
**dadurch gekennzeichnet, dass**
das zweite Deckelelement (123) einen zweiten Laschenteil (123a) und ein Ende (122c, 122d) gegenüber dem zweiten Laschenteil (123a) hat; und
der Abstand zwischen dem ersten Laschenteil (113a) und der Stirnwand (113b) des ersten Deckelelements (113) länger als der Abstand zwischen dem zweiten Laschenteil (123a) und dem Ende (122c, 122d) des zweiten Deckelelements (123) ist, so dass das Ende (122c, 122d) dem ersten Laschenteil (113a) näher als die Stirnwand (113b) angeordnet ist.

2. Packung gemäß Anspruch 1, wobei eine Seite der zweiten Folie (120) mit einer Seite der ersten Folie (110) verbunden ist, die in dem Zustand, in dem der zweiten Laschenteil (123a) des zweiten Deckelelements (123) so angeordnet ist, dass er dem ersten Laschenteil (113a) des ersten Deckelelements (113) gegenüberliegt, zu dem Artikelaufbewahrungsraum (100a) zeigt.

3. Packung gemäß Anspruch 1 oder 2, wobei ein Bereich, der von einem ersten Schnitt (112) umgeben ist, der in der ersten Folie (110) ausgebildet ist, als das erste Deckelelement (113) verwendet wird, und ein Bereich, der von einem zweiten Schnitt (122) umgeben ist, der in der zweiten Folie (120) ausgebildet ist, als das zweite Deckelelement (123) verwendet wird, und mindestens entweder der erste Schnitt (112) oder der zweite Schnitt (122) geschlossen ist.

4. Packung gemäß Anspruch 2, wobei ein Bereich, der von einem ersten Schnitt (112) umgeben ist, der in der ersten Folie (110) ausgebildet ist, als das erste Deckelelement (113) verwendet wird, und ein Bereich, der von einem zweiten Schnitt (122) umgeben ist, der in der zweiten Folie (120) ausgebildet ist, als das zweite Deckelelement (123) verwendet wird, und mindestens entweder der erste Schnitt (112) oder der zweite Schnitt (122) auf einer Seite eines Bereichs offen ist, der an der Öffnung (132a) mindestens entweder dem ersten Laschenteil (113a) oder dem zweiten Laschenteil (123a) gegenüberliegt.

5. Packung gemäß Anspruch 3 oder 4, wobei das zweite Deckelelement (123) einen Wiederverschließteil (125b) zum Öffnen und Schließen der in der dritten Folie (130) ausgebildeten Öffnung (132a) und einen proximalen Teil (125d) hat, der auf einer Seite des Wiederverschließteils (125b) gegenüber dem zweiten Laschenteil (123a) ausgebildet ist, und wobei die andere Seite der zweiten Folie (120) mit der anderen Seite der dritten Folie (130) verbunden ist, so dass ein Bereich des zweiten Laschenteils (123a) nicht verbunden ist und ein Verbindungsfestigkeit in einem Bereich des proximalen Teils (125d) größer oder gleich derjenigen in einem Bereich des Wiederverschließteils (125b) ist.

6. Packung gemäß Anspruch 4 oder 5, wobei mindestens entweder der erste Schnitt (112) oder der zweite Schnitt (122) Enden hat, die so geformt sind, dass sie ein Einreißen verhindern.

7. Packung gemäß einem der Ansprüche 2 bis 6, wobei mindestens entweder das erste Deckelelement (113) oder das zweite Deckelelement (123) einen Schlitz (326) hat, der auf einer Seite eines Bereichs ausgebildet ist, der an der Öffnung (132a) mindestens entweder dem ersten Laschenteil (113a) oder dem zweiten Laschenteil (123a) gegenüberliegt und sich in einer Richtung quer zu einer Richtung erstreckt, in der mindestens entweder das erste Deckelelement (113) oder das zweite Deckelelement (123) abgezogen wird.

8. Packung gemäß Anspruch 7, wobei mindestens entweder das erste Deckelelement (113) oder das zweite Deckelelement (123) mehrere Schlitze (517a, 517b) hat, die voneinander beabstandet sind und sich in einer Richtung quer zu der Abziehrichtung erstrecken.

9. Packung gemäß Anspruch 7, wobei das zweite Deckelelement (123) mehrere Schlitze (517a, 517b) hat, die auf einer Seite des Bereichs ausgebildet sind, der an der Öffnung (132a) dem zweiten Laschenteil (123a) gegenüberliegt und in der Richtung voneinander beabstandet sind, in der das zweite Deckelelement (123) abgezogen wird, und sich in einer Richtung quer zur Abziehrichtung des zweiten Deckelelements (123) erstrecken.

10. Packung gemäß einem der Ansprüche 2 bis 6, wobei das zweite Deckelelement (123) eine Aussparung (628) hat, die auf einer Seite des Bereichs ausgebildet ist, die an der Öffnung (132a) dem zweiten Laschenteil (123a) gegenüberliegt und sich in einer Richtung quer zu der Richtung erstreckt, in der das zweite Deckelelement (123) abgezogen wird.

## Revendications

1. Emballage (100) comprenant :
un espace de stockage d'article (100a) formé par une première feuille (110),
une ouverture (132a) à travers laquelle un article (10) stocké à l'intérieur de l'espace de stockage d'article (100a) est retiré, et
un couvercle (140) pour ouvrir et fermer l'ouverture (132a),
dans lequel :
le couvercle (140) comprend un premier élément de couvercle (113) et un second élément de couvercle (123),
l'emballage (100) comprend en outre une deuxième feuille (120) et une troisième feuille (130),
le premier élément de couvercle (113) est formé dans la première feuille (110),
le second élément de couvercle (123) est formé dans la deuxième feuille (120),
l'ouverture (132a) est formée dans la troisième feuille (130), et
un côté de la deuxième feuille (120) est relié à un côté de la première feuille (110) qui fait face à l'espace de stockage d'article (100a) dans l'état dans lequel le second élément de couvercle (123) formé dans la seconde feuille (120) est positionné pour être opposé au premier élément de couvercle (113) formé dans la première feuille (110), et l'autre côté de la deuxième feuille (120) est relié à un côté de la troisième feuille (130) de sorte qu'au moins le second élément de couvercle (123) peut être détaché dans un état dans lequel l'ouverture (132a) formée dans la troisième feuille (130) est positionnée pour être opposée au second élément de couvercle (123) formé dans la deuxième feuille (120),
dans lequel le premier élément de couvercle (113) a une première partie de languette (113a) et une paroi d'extrémité (113b) opposée à ladite première partie de languette (113a),
**caractérisé en ce que** le second élément de couvercle (123) a une seconde partie de languette (123a) et une extrémité (122c, 122d) opposée à ladite seconde partie de languette (123a) ; et
la distance entre la première partie de languette (113a) et la paroi d'extrémité (113b) du premier élément de couvercle (113) est plus longue que la distance entre la seconde partie de languette (123a) et l'extrémité (122c, 122d) du second élément de couvercle (123), de sorte que ladite extrémité (122c, 122d) est positionnée plus près de la première partie de languette (113a) que la paroi d'extrémité (113b).

2. Emballage selon la revendication 1, dans lequel un côté de la deuxième feuille (120) est relié à un côté de la première feuille (110) qui fait face à l'espace de stockage d'article (100a) dans l'état dans lequel la seconde partie de languette (123a) du second élément de couvercle (123) est positionnée pour être opposée à la première partie de languette (113a) du premier élément de couvercle (113).

3. Emballage selon la revendication 1 ou 2, dans lequel une région qui est entourée par une première découpe (112) formée dans la première feuille (110) est utilisée en tant que premier élément de couvercle (113), et une région qui est entourée par une seconde découpe (122) formée dans la deuxième feuille (120) est utilisée en tant que second élément de couvercle (123), et au moins l'une parmi la première découpe (112) et la seconde découpe (122) est fermée.

4. Emballage selon la revendication 2, dans lequel une région qui est entourée par une première découpe (112) formée dans la première feuille (110) est utilisée en tant que premier élément de couvercle (113) et une région qui est entourée par une seconde découpe (122) formée dans la deuxième feuille (120) est utilisée en tant second élément de couvercle (123), et au moins l'une parmi la première découpe (112) et la seconde découpe (122) est ouverte sur un côté d'une région faisant face à l'ouverture (132a) opposée à au moins l'une parmi la première partie de languette (113a) et la seconde partie de languette (123a).

5. Emballage selon la revendication 3 ou 4, dans lequel le second élément de couvercle (123) a une partie d'ouverture/fermeture (125b) pour ouvrir et fermer l'ouverture (132a) formée dans la troisième feuille (130) et une partie proximale (125d) formée d'un côté de la partie d'ouverture/fermeture (125b) opposée à la seconde partie de languette (123a), et dans lequel l'autre côté de la deuxième feuille (120) est relié à un côté de la troisième feuille (130) de sorte qu'une région de la seconde partie de languette (123a) n'est pas reliée et la force de liaison dans une région de la partie proximale (125d) est égale ou supérieure à celle qui existe dans une région de la partie d'ouverture/fermeture (125b).

6. Emballage selon la revendication 4 ou 5, dans lequel au moins l'une parmi la première découpe (112) et la seconde découpe (122) a des extrémités formées pour empêcher la séparation.

7. Emballage selon l'une quelconque des revendications 2 à 6, dans lequel au moins l'un parmi le premier élément de couvercle (113) et le second élément de couvercle (123) a une fente (326) qui est formée d'un côté d'une région faisant face à l'ouverture (132a) opposée à au moins l'une parmi la première partie de languette (113a) et la seconde partie de languette (123a) et s'étend dans une direction transversale à une région dans laquelle le au moins un parmi le premier élément de couvercle (113) et le second élément de couvercle (123) est détaché.

8. Emballage selon la revendication 7, dans lequel au moins l'un parmi le premier élément de couvercle (113) et le second élément de couvercle (123) a une pluralité de fentes (517a, 517b) espacées les unes des autres et s'étendant dans une direction transversale à ladite direction de détachement.

9. Emballage selon la revendication 7, dans lequel le second élément de couvercle (123) a une pluralité de fentes (517a, 517b) qui sont formées d'un côté de la région faisant face à l'ouverture (132a) opposée à la seconde partie de languette (123a) et éloignées les unes des autres dans la direction dans laquelle le second élément de couvercle (123) est détaché, et s'étendent dans une direction transversale à la direction de détachement du second élément de couvercle (123).

10. Emballage selon l'une quelconque des revendications 2 à 6, dans lequel le second élément de couvercle (123) a un vide (626) qui est formé d'un côté de la région faisant face à l'ouverture (132a) opposée à la seconde partie de languette (123a) et s'étend dans une direction transversale à la direction dans laquelle le second élément de couvercle (123) est détaché.
